Europäisches Patentamt

European Patent Office

Office européen des brevets

(11) Numéro de publication : **0 404 613 B1**

# FASCICULE DE BREVET EUROPEEN

(45) Date de publication du fascicule du brevet :
12.08.92 Bulletin 92/33

(51) Int. Cl.⁵ : **B60K 20/02, F16H 59/04**

(21) Numéro de dépôt : **90401422.2**

(22) Date de dépôt : **29.05.90**

(54) **Levier de commande de la boîte de vitesses d'un véhicule automobile et procédé de fabrication de ce levier.**

(30) Priorité : **07.06.89 FR 8907554**

(43) Date de publication de la demande :
**27.12.90 Bulletin 90/52**

(45) Mention de la délivrance du brevet :
**12.08.92 Bulletin 92/33**

(84) Etats contractants désignés :
**DE ES GB IT**

(56) Documents cités :
**EP-A- 0 083 021
DE-A- 2 213 361
FR-A- 2 119 708**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Bloret, Jean-Pierre
30 rue de Paimpol
F-35700 Rennes (FR)**

(74) Mandataire : **Bouget, Lucien et al
Cabinet Lavoix 2, Place d'Estienne d'Orves
F-75441 Paris Cédex 09 (FR)**

Jouve, 18, rue Saint-Denis, 75001 PARIS

## Description

L'invention concerne un levier de commande de la boîte de vitesses d'un véhicule automobile.

Les véhicules automobiles dont la boîte de vitesses est commandée manuellement comportent un levier de vitesses disposé dan l'habitacle du véhicule et généralement monté dans le plancher du poste de conduite. Ce levier peut être actionné par le conducteur pour permettre une sélection manuelle des rapports de la boîte de vitesses en fonctions des conditions de déplacement du véhicule.

Les leviers de vitesses utilisés le plus couramment sur les véhicules automobiles construits actuellement se composent de plusieurs éléments assemblés ou rapportés.

Le levier de vitesses proprement dit est constitué par un tube métallique dont le diamètre extérieur est généralement égal à 13 mm, le diamètre intérieur étant égal à 9 mm.

L'une des extrémités du tube métallique est usinée pour obtenir un filetage ou tout autre moyen de fixation permettant le montage et l'accrochage de la boule de manoeuvre sur laquelle s'exerce l'action manuelle du conducteur.

A son extrémité opposée, le tube métallique constituant le levier est solidaire d'un second tube métallique de faible longueur dont l'axe est orthogonal à l'axe du levier. Ce second tube est fixé par soudure à l'extrémité du levier.

Un axe de liaison du levier à la timonerie de la boîte de vitesses est engagé dans le second tube et dans les deux branches en vis-à-vis d'une chape constituant la partie d'extrémité de la timonerie. Le tube fixé à l'extrémité du levier reçoit deux bagues en matière thermoplastique qui permettent d'assurer le guidage et le glissement en rotation de l'axe de liaison à la timonerie ainsi que le rattrapage de jeu latéral du second tube à l'intérieur de la chape de liaison.

Le levier de vitesses comporte de plus, dans une position intermédiaire entre ses deux extrémités, une rotule sphérique en matière thermoplastique qui peut être rapportée par surmoulage sur le tube métallique constituant le levier proprement dit. Cette rotule permet de réaliser l'appui et la liaison sur le plancher du véhicule ainsi que le guidage en rotation du levier de vitesses.

Un tel dispositif est donc complexe et relativement coûteux et nécessite pour sa fabrication de nombreuses opérations successives. En outre, les leviers de vitesses suivant l'art antérieur présentent une masse relativement importante et transmettent à l'intérieur de l'habitacle des bruits provenant des organes mécaniques du véhicule.

On a proposé de réaliser certaines parties au moins des leviers de vitesses des véhicules automobiles en matière plastique mais la fabrication de tels leviers nécessite la mise en oeuvre d'opérations successives complexes.

Le but de l'invention est donc de proposer un levier de commande de la boîte de vitesses d'un véhicule automobile constitué par une tige comportant, à l'une de ses extrémités, des moyens de fixation d'une pièce pour la préhension du levier par le conducteur, à son extrémité opposée, des moyens de liaison du levier à un organe de transmission de mouvement à la boîte de vitesses et, entre ces deux extrémités, une rotule de guidage et de maintien du levier, ce levier d'une structure simple et réalisé sous forme allégée ayant un prix de revient nettement plus faible que les leviers selon l'art antérieur.

Dans ce but, l'ensemble du levier est réalisé sous forme monobloc et constitue une seule pièce en matière thermoplastique.

Afin de bien faire comprendre l'invention, on va décrire, à titre d'exemples non limitatifs, en se référant aux figures jointes en annexe, un levier de vitesses suivant l'art antérieur et, de manière comparative, un levier de vitesses suivant l'invention et suivant plusieurs modes de réalisation.

La figure 1 est une vue en élévation latérale d'un levier de vitesses suivant l'art antérieur.

La figure 2 est une vue en perspective de la partie inférieure du levier et de ses moyens de liaison à la timonerie de la boîte de vitesses.

La figure 3 est une vue en coupe suivant 3-3 de la figure 2.

La figure 4 est une vue en élévation et en coupe par un plan vertical d'un levier de vitesse suivant l'invention et suivant un premier mode de réalisation.

La figure 5 est une vue en coupe suivant 5-5 de la figure 4.

La figure 6 est une vue en coupe de la partie inférieure du levier de vitesses représenté sur la figure 4 assurant la liaison de ce levier avec la timonerie de la boîte de vitesses.

La figure 6A est une vue à plus grande échelle du détail A de la figure 6.

Les figures 6B et 6C sont des vues analogues à la figure 6A montrant des variantes de réalisation du détail A.

Les figures 7A, 7B et 7C sont des vues suivant 7 de la figure 4 montrant trois variantes de réalisation des bagues de guidage de l'axe de liaison du levier à la timonerie de la boîte de vitesses.

La figure 8 est une vue en élévation latérale d'un levier suivant l'invention et suivant une variante de réalisation du levier représenté sur la figure 4.

La figure 9 est une vue en coupe axiale de la partie d'extrémité d'un levier de vitesses sur laquelle est fixée la boule de manoeuvre du levier.

La figure 10 est une vue en coupe suivant 10-10 de la figure 9.

La figure 11 est une vue en élévation latérale d'un dispositif de fixation d'une boule de manoeuvre d'un levier de vitesses suivant une variante de réalisation.

La figure 12 est une vue en coupe axiale de la partie d'extrémité d'un levier de vitesse et d'une boule de manoeuvre fixée sur ce levier grâce à un dispositif tel que représenté sur la figure 11.

La figure 13 est une vue en coupe suivant 13-13 de la figure 12.

La figure 14 est une vue en coupe axiale d'une rotule de guidage et de maintien d'un levier de vitesses suivant l'invention et suivant une variante de réalisation.

La figure 15 est une vue en coupe et en élévation latérale d'un levier de vitesses suivant l'invention comportant un dispositif de blocage antivol.

La figure 16 est une vue suivant 16-16 de la figure 15.

La figure 17 est une vue en élévation latérale d'une variante de réalisation de la partie inférieure du levier représenté sur la figure 8.

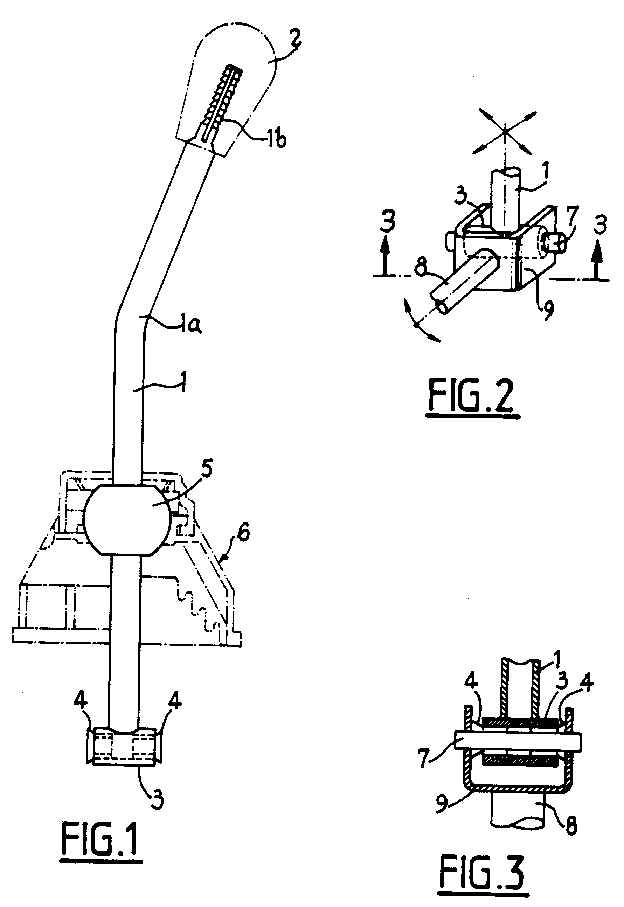

Sur la figure 1, on voit un levier de vitesses suivant la technique connue constitué principalement par un tube métallique 1 légèrement coudé dans sa partie 1a.

Le tube 1 comporte une partie d'extrémité 1b mise en forme pour constituer un élément d'accrochage de la boule de manoeuvre 2 du levier de vitesses. La partie 1b à diamètre réduit par rapport à la partie courante du tube 1 comporte une fente longitudinale permettant sa déformation radiale et des dents ou filets d'accrochage.

Sur la partie d'extrémité du tube 1 opposée à la partie 1b est fixé, par soudage, un second tube 3 de faible longueur dont 1 axe est orthogonal à l'axe du tube 1.

Des bagues 4 en matière plastique sont rapportées à l'intérieur du second tube 3 qui permet le raccordement du levier à la timonerie de la boîte de vitesses.

Le levier de vitesses comporte de plus, dans une zone intermédiaire entre ses extrémités, une rotule 5 de forme sphérique en matière plastique rapportée sur le tube 1 par surmoulage. La rotule 5 est engagée dans un ensemble 6 constitué par des pièces en matière plastique, en métal et en caoutchouc, fixées sur le plancher du véhicule. La rotule 5 assure l'appui et le maintien du levier sur le plancher du véhicule en même temps que le guidage en rotation de ce levier.

Sur les figures 2 et 3, on voit les moyens de liaison entre l'extrémité du levier de vitesses située sous le plancher du véhicule et la timonerie reliée à la boîte de vitesses.

Cette timonerie comporte une tige 8 et une chape 9 dans laquelle sont prévues des ouvertures pour le passage d un axe de liaison 7 qui est engagé dans les deux branches de la chape et dans le second tube 3 relié de manière rigide à l'extrémité du tube 1 du levier de vitesses.

Les bagues élastiques 4 assurent à la fois le guidage et le glissement en rotation de l'axe 7 et le rattrapage de jeu latéral du second tube 3, à l'intérieur de la chape 9.

Le levier de vitesses selon l'art antérieur, représenté sur les figures 1, 2 et 3, est réalisé en grande partie en métal et constitué de plusieurs pièces rapportées les unes sur les autres.

La fabrication de ce levier de vitesses est donc relativement complexe, longue et coûteuse. De plus, la masse totale du levier de vitesses est relativement importante. Ce levier est susceptible de transmettre des bruits venant du compartiment du véhicule, à l'intérieur de l'habitacle.

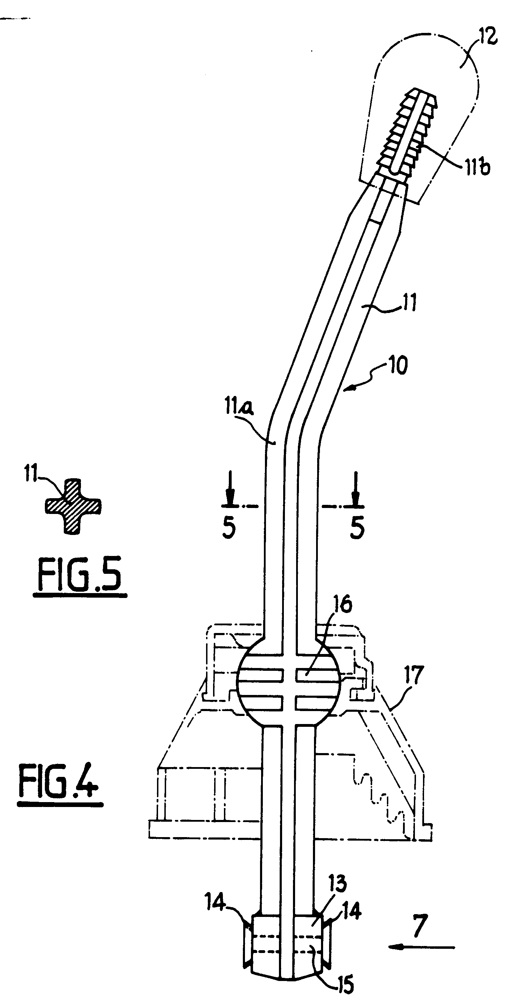

Sur la figure 4, on voit un levier de vitesses suivant l'invention, ce levier désigné de manière générale par le repère 10 étant réalisé sous forme monobloc, en une matière thermoplastique qui peut être renforcée, telle qu'une polyamide chargée de fibres de verre. Ce levier peut être obtenu en une seule opération, par injection de la matière thermoplastique dans un moule.

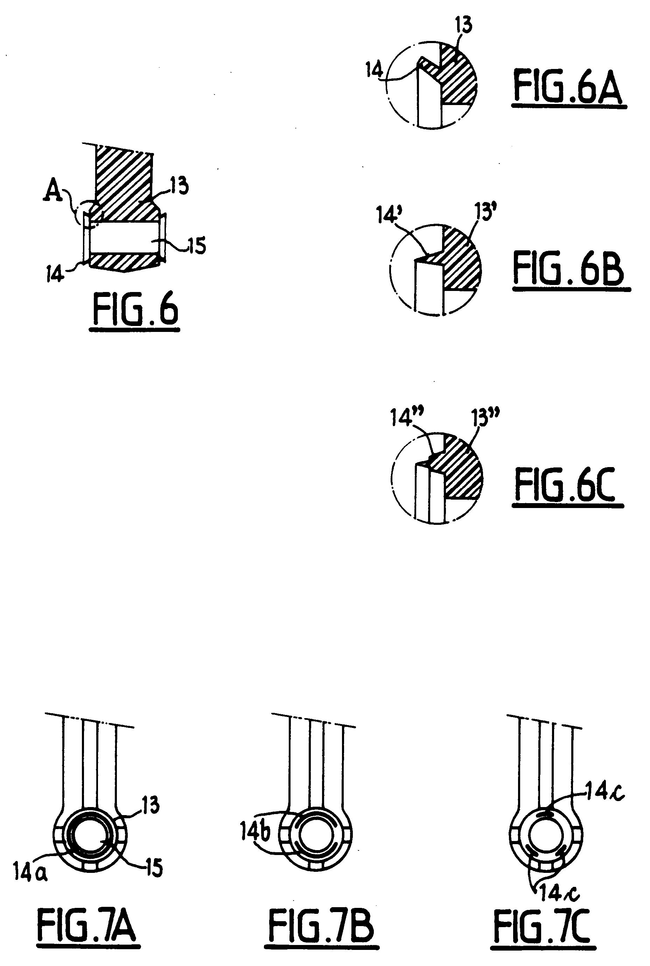

Le levier de vitesses 10 comporte une tige 11 légèrement coudée dans sa partie 11a et dont la section transversale visible sur la figure 5 est cruciforme. Cette section est calculée de manière que la tige 11 du levier 10 présente une rigidité supérieure à 1,5 daN/mm et une résistance à la rupture supérieure à 40 daN.

La tige 11 comporte, à l'une de ses extrémités, une partie amincie 11b présentant une fente centrale et une denture ou un filetage externe permettant l'engagement et la fixation de la boule ou pommeau de manoeuvre 12 du levier de vitesses.

Comme il est visible sur les figures 4 et 6, le levier de vitesses 11 comporte, à son extrémité opposée au pommeau 12, une partie 13 en surépaisseur traversée par un alésage 15 venu de moulage.

La partie 13 comporte également latéralement des lèvres souples 14 entourant l'alésage 15 et destinées à assurer le rattrapage de jeu latéral de la partie 13, lorsque celle-ci est engagée dans la chape de liaison de la timonerie de la boîte de vitesses, l'assemblage de cette partie 13 étant réalisé par l'intermédiaire d'un axe engagé dans l'alésage 15. La réalisation de la liaison entre le levier de vitesses et la timonerie est assurée d'une manière similaire à la liaison d'un levier selon l'art antérieur, par l'intermédiaire d'un second tube 3, comme il est représenté sur les figures 2 et 3.

Dans le cas du levier de vitesses suivant l'invention, les bagues ou lèvres 14 de rattrapage de jeu sont formées sur la partie 13 du levier et venues de matières avec cette partie 13, lors du moulage.

Comme il est visible sur les figures 6A, 6B et 6C, les lèvres ou bagues venues de matière avec l'extrémité du levier peuvent avoir des formes différentes en section transversale.

Sur la figure 6A, la lèvre ou bague est inclinée et présente une forme tronconique.

Sur la figure 6B, les bagues ou lèvres 14′ venues de matière avec la pièce 13′ ont une section triangulaire donnant une grande souplesse à cette bague ou lèvre.

Sur la figure 6C, la bague ou lèvre 14″ venue de matière avec la partie d'extrémité 13″ du levier présente une partie d'extrémité effilée assurant une grande souplesse.

Comme il est visible sur les figures 7A, 7B et 7C, les lèvres 14 peuvent constituer des bagues 14a continues sur toute la circonférence entourant l'alésage 15 (figure 7A), deux parties discontinues 14b suivant cette circonférence (figure 7B) ou encore plusieurs plots 14c (par exemple trois) comme représenté sur la figure 7C.

Comme il est visible sur la figure 4, on voit que le levier de vitesses comporte également une rotule 16 assurant l'appui, le maintien et le guidage du levier 10, à l'intérieur d'un ensemble de maintien et de guidage 17 fixé sur le plancher du véhicule.

La rotule 16 peut être constituée par un ensemble nervuré réalisé dans la même matière que la tige 11 du levier de vitesses 10 ou encore par la juxtaposition de deux matières plastiques, dans une opération de bi-injection, comme il est sera expliqué plus loin.

Dans tous les cas, le moulage du levier de vitesses est assuré en une seule opération.

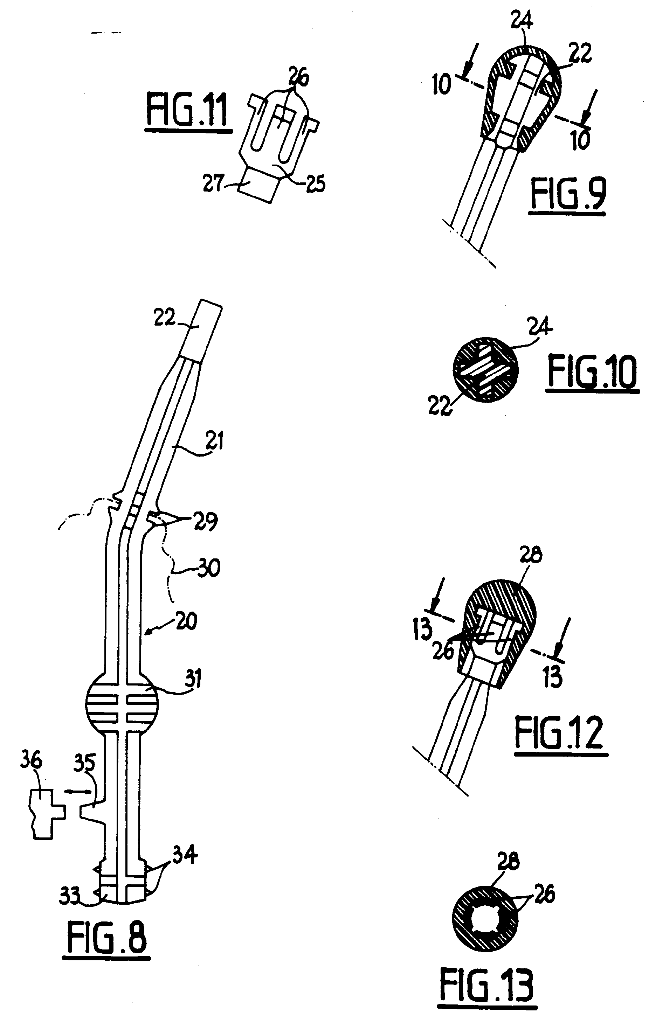

Sur la figure 8, on voit une variante de réalisation d'un levier 20 suivant l'invention qui comporte une tige 21 dont la section est cruciforme et qui présente les qualités de rigidité et de résistance voulues.

Cette tige 21 comporte, à l'une de ses extrémités, une partie 22 permettant l'assemblage d'une boule ou pommeau de manoeuvre. Cette partie 22 peut présenter une forme profilée cruciforme en section transversale et une forme destinée à permettre le moulage et l'accrochage du pommeau en section longitudinale, comme il est visible sur les figures 9 et 10.

La partie 22 de la tige 21 est réalisée dans la même matière plastique que la tige 21, c'est-à-dire par exemple une matière thermoplastique polyamide chargée de fibres de verre.

Le pommeau de manoeuvre 24, en revanche, est réalisé en une matière telle que le polychlorure de vinyl. Ce pommeau présente une forme extérieure assurant, en même temps que le choix de la matière plastique utilisée pour sa réalisation, un contact manuel agréable et confortable pour le conducteur.

La boule de manoeuvre peut être rapportée sur la partie 22 de la tige par surmoulage ou encore être réalisée par bi-injection. Dans ce second cas, le pommeau est réalisé en une seule opération de moulage avec l'ensemble du levier de vitesses.

Sur les figures 11, 12 et 13, on a représenté un second mode de réalisation d'un pommeau pour un levier de vitesses suivant l'invention.

Sur la figure 11, on a représenté une pièce d'assemblage 25 comportant des languettes 26 d'assemblage par clippage et une collerette 27 qui peut être engagée sur la partie d'extrémité 22 du levier 20, pour sa fixation à l'extrémité du levier.

Le pommeau de manoeuvre 28 est réalisé par moulage, de manière indépendante du levier et comporte une partie interne creuse permettant son as assemblage par clippage sur les languettes 26.

La fixation du pommeau est réalisée par mise en place de la pièce 25 à l'extrémité du levier 20 puis par engagement en force du pommeau 28 sur la partie de fixation par clippage de la pièce 25.

Le levier de vitesses 20 peut comporter, en plus des éléments déjà décrits pour le levier de vitesses représenté sur la figure 4, divers éléments à but décoratif ou fonctionnel. Ces éléments peuvent être réalisés par surmoulage ou par moulage bi-injection.

Par exemple, le levier de vitesses 20 représenté sur la figure 8 comporte deux parties 29 en saillie radiale vers l'extérieur permettant la retenue de la gaine de protection 30 en caoutchouc qui est fixée autour du levier de vitesses, au-dessus du plancher du véhicule et qui assure en particulier la protection de la rotule de maintien et de guidage 31.

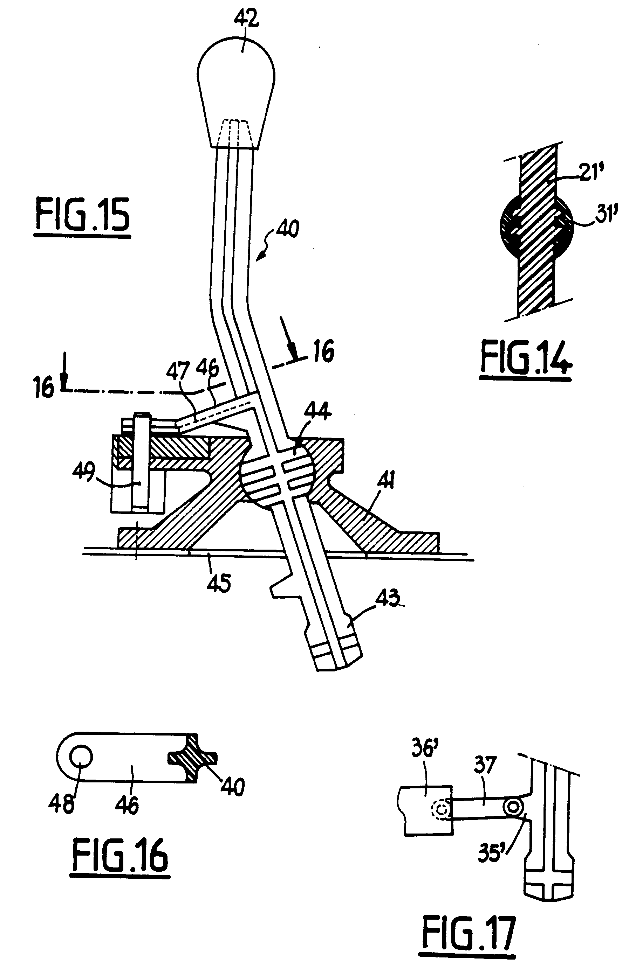

La rotule 31 peut être réalisée de la même manière que la rotule du levier représentée sur la figure 4 ou comporter, comme il est représenté sur la figure 14, une partie interne 21′ réalisée dans la même matière plastique que la tige 21 et une partie externe 31′ constituant la rotule proprement dite réalisée par surmoulage ou moulage bi-injection sur le corps de la tige 21′. Dans ce cas, la partie externe 31′ de la rotule peut être avantageusement réalisée en une matière plastique telle que le polyacétal qui présente un faible coefficient de frottement et une très bonne résistance à l'usure.

Dans le cas de la bi-injection, l'ensemble de la rotule est réalisé avec la tige du levier au cours d'une seule opération de moulage par injection.

La partie inférieure 33 du levier de vitesses 20 assurant l'assemblage de ce levier à la timonerie de la boîte de vitesses est réalisée, comme précédemment, de manière monobloc avec la tige du levier et en une seule opération. Cette partie 33 comporte, comme précédemment, des lèvres ou bagues latérales 34 assurant le rattrapage de jeu lors de l'assemblage de la partie 33 du levier avec la chape de liaison de la timonerie de la boîte de vitesses.

Le levier de vitesses représenté sur la figure 8 comporte également une partie 35 en saillie radiale d'un côté du levier de vitesses qui constitue un poussoir d'actionnement d'un relais ou contacteur électrique 36 fixé sur le véhicule, à proximité du levier de vitesses. Le contacteur électrique 36 est relié à un asservissement de contrôle qui permet, par exemple, d'assurer que la sélection d'une vitesse, a un certain moment, correspond bien à des conditions optimales par rapport au régime du moteur.

Comme il est visible sur la figure 17, à titre de variante, la partie en saillie 35′ du levier de vitesse peut comporter une ouverture permettant la fixation d'un axe d'articulation d'une biellette 37 articulée, à son autre extrémité, sur une partie mobile du contacteur électrique 36′.

Sur les figures 15 et 16, on voit une variante de réalisation d'un levier de vitesses 40 suivant l'invention comportant, à l'une de ses extrémités, une boule de manoeuvre 42, à son autre extrémité, une partie d'assemblage 43 à la timonerie de la boîte de vitesses et, dans une position intermédiaire entre ses extrémités, une sphère 44 de maintien et de guidage en rotation du levier sur un support 41 solidaire du plancher 45 du véhicule.

Le levier de vitesses comporte de plus une plaquette 46 venue de matière avec la tige du levier lors de son moulage par injection et qui peut être renforcée par une armature métallique interne 47.

La plaquette 46 permet de réaliser un blocage antivol du levier de vitesses du véhicule. La plaquette 46 comporte un trou 48 a son extrémité opposée à la tige du levier de vitesses 40.

En position de blocage du levier, comme représenté sur la figure 15, l'extrémité de la plaquette 47 comportant le trou 48 vient en coïncidence avec la surface supérieure du support 41 solidaire du plancher du véhicule.

Il est alors possible d'introduire un barreau de verrouillage 49 monté mobile dans le support 41, à l'intérieur du trou 48.

Le déplacement du barreau 49 entre ses positions de verrouillage et de déverrouillage peut être commandé par un électro-aimant ou par un système mécanique.

Lorsque le verrouillage est réalisé, le levier de vitesses ne peut plus être actionné.

Les principaux avantages du levier de vitesses suivant l'invention sont qu'il peut être obtenu, sous forme monobloc, en une seule opération de moulage d'une matière plastique et qu'il peut comporter de nombreux éléments destinés à accomplir des fonctions diverses de contrôle ou de sécurité liées à l'utilisation du levier de vitesses.

En outre, le levier de vitesses étant réalisé en une seule opération de moulage d'une matière plastique, les cadences de fabrication peuvent être considérablement augmentées et le prix de revient du levier de vitesse est très nettement inférieur au prix de revient des leviers de vitesses de fabrication classique. On peut envisager une diminution du prix de revient du levier de vitesses de l'ordre de 60 %. On peut envisager également une diminution considérable des coûts des investissements nécessaires pour la réalisation industrielle des leviers de vitesses.

D'autre part, la masse totale du levier est très nettement inférieure à celle d'un levier selon la technique antérieure, la diminution de masse pouvant être de l'ordre de 50 %. Ce gain de masse a une influence importante sur la transmission des bruits mécaniques vers l'intérieur de l'habitacle ; on obtient donc une amélioration sensible du confort pour les occupants du véhicule.

En outre, il est possible de mettre en oeuvre des techniques de moulage perfectionnées pour la réalisation d'un levier monobloc présentant des caractéristiques parfaitement adaptées à son utilisation.

On peut par exemple utiliser un moulage par bi-injection, c'est-à-dire par injection de deux matières plastiques différentes dans le moule de réalisation du levier. Comme il a été indiqué plus haut, on peut par exemple réaliser la tige constituant le corps du levier en une matière polyamide chargée de fibres de verre assurant les fonctions de rigidité et de résistance mécanique du levier et la rotule de maintien et de guidage du levier en une matière thermoplastique telle que le polyacétal pour diminuer le frottement et pour améliorer la résistance à l'usure.

On peut également envisager un procédé de bi-injection pour réaliser le moulage du pommeau de manoeuvre en même temps que le moulage du levier. Dans ce cas, on choisit une matière plastique telle que le chlorure de polyvinyl pour réaliser le pommeau, afin d'obtenir les qualités voulues en ce qui concerne le confort du contact manuel pour le conducteur.

On peut également obtenir par moulage ou bi-injection la réalisation de formes décoratives sur le levier de vitesses indiquant par exemple le sigle du constructeur ou le type de voiture sur lequel est monté le levier de vitesses.

L'invention ne se limite pas au mode de réalisation qui a été décrit.

C'est ainsi qu'on peut envisager des formes différentes du levier en particulier une forme différente de la section transversale de la tige de ce levier, cette section pouvant être circulaire et le levier présentant la forme d'une tige pleine ou tubulaire.

La rotule de guidage et de maintien peut être réalisée avec une structure quelconque et constituée d'une seule ou de plusieurs matières plastiques.

La partie d'extrémité de la tige destinée à être jointe au pommeau peut présenter une forme quelconque et le pommeau peut être rapporté sur cette extrémité ou formé pendant le moulage.

L'extrémité opposée du levier assurant la liaison avec la timonerie de la boîte de vitesses peut également avoir une forme différente de celle qui a été décrite et qui est fonction du mode de réalisation de la partie de liaison de la timonerie.

L'invention s'applique au levier de vitesses de tout véhicule automobile disposé dans l'habitacle du véhicule. Elle concerne aussi bien un levier de commande de boîte manuelle qu'un levier de sélection de boîte automatique.

## Revendications

1. Levier de commande de la boîte de vitesses d'un véhicule automobile constitué par une tige (11, 21) comportant à l'une de ses extrémités des moyens (11b, 22) de fixation d'une pièce (12, 22, 28) pour la préhension du levier par le conducteur, à son extrémité opposée, des moyens de liaison (13, 33) du levier à un organe de transmission de mouvement à la boîte de vitesses et, entre ses deux extrémités, une rotule (16, 31 , 44) de guidage et de maintien du levier, caractérisé par le fait que l'ensemble du levier (10, 20, 40) est réalisé sous forme monobloc et constitue une seule pièce en matière thermoplastique.

2. Levier suivant la revendication 1, caractérisé par le fait que les moyens de liaison du levier (10, 20, 40) à l'organe de transmission de mouvement à la boîte de vitesses sont constitués par une partie (13, 33, 43) du levier monobloc élargie dans une direction transversale et traversée, suivant cette direction transversale, par un alésage (15), la liaison du levier et de l'organe de transmission de mouvement à la boîte de vitesse étant constituée par un axe introduit dans l'alésage (15) et traversant une pièce de liaison de l'organe de transmission.

3. Levier suivant la revendication 2, caractérisé par le fait que la partie élargie (13, 33, 43) du levier (10, 20, 40) comporte, latéralement, autour de l'alésage (15), des lèvres souples continues ou discontinues de rattrapage de jeu (14a, 14b, 14c).

4. Levier suivant la revendication 3, caractérisé par le fait que les lèvres (14) constituent des bagues (14a) circulaires et continues.

5. Levier suivant la revendication 3, caractérisé par le fait que les lèvres (14b, 14c) constituent des parties de bague ou plots discontinus, suivant une circonférence entourant l'alésage (15).

6. Levier suiant l'une quelconque des revendications 4 et 5, caractérisé par le fait que les lèvres (14) présentent une forme tronconique.

7. Levier suivant l'une quelconque des revendications 4 et 5, caractérisé par le fait que les lèvres (14′, 14″) présentent une partie externe effilée et une section en forme de triangle.

8. Levier suivant l'une quelconque des revendications 1 à 7, caractérisé par le fait qu'il comporte une tige (11, 21) dont la section transversale est cruciforme.

9. Levier suivant l'une quelconque des revendications 1 à 8, caractérisé par le fait que la tige (11, 21) du levier comporte à son extrémité une partie (22) assurant le support et le maintien d'un pommeau de préhension (24) surmoulé sur la partie (22) de la tige (21) du levier ou moulé simultanément à la tige (21).

10. Levier suivant l'une quelconque des revendications 1 à 8, caractérisé par le fait qu'il comporte une tige (21) ayant une extrémité (22) permettant le montage d'une pièce d'assemblage (25) comportant des languettes de clippage (26) pour la fixation d'un pommeau de manoeuvre (28).

11. Levier de commande suivant l'une quelconque des revendications 1 à 10, caractérisé par le fait qu'il comporte une rotule de guidage et de maintien (31, 31′) dont la partie interne est constituée par la tige (21′) du levier (20) et dont la partie externe (31′) de contact est réalisée en une matière plastique différente de la matière plastique constituant la tige (21′).

12. Levier suivant la revendication 11, caractérisé par le fait que la partie externe (31′) de la rotule est réalisé, par la même opération de moulage que la tige (21′) du levier, par une technique de moulage bi-injection.

13. Levier suivant l'une quelconque des revendications 1 à 12, caractérisé par le fait qu'il comporte des parties en saillie (29) venues de matière lors du moulage, sur la tige (21) du levier, pour la retenue d'une gaine de protection (30) du levier dans l'habitacle du véhicule.

14. Levier suivant l'une quelconque des revendications 1 à 13, caractérisé par le fait qu'il comporte une partie en saillie (35, 35′) dans la direction transversale, pour l'actionnement d'un contacteur électrique (36, 36′ ) de contrôle du changement de vitesse du véhicule.

15. Levier suivant l'une quelconque des revendications 1 à 14, caractérisé par le fait qu'il comporte, venue de matière avec la tige du levier, une plaquette (46) de direction transversale comportant un trou (48) à son extrémité opposée à la tige du levier destinée à venir en appui sur un support (41) solidaire du plancher (45) du véhicule, pour l'introduction, dans le trou (48) de la plaquette (46), d'un barreau (49) de blocage antivol du levier (40).

16. Levier suivant l'une quelconque des revendications 1 à 15, caractérisé par le fait que la tige (11, 21) du levier est constituée par une polyamide renforcée par de la fibre de verre.

17. Levier suivant l'une quelconque des revendications 1 à 16, caractérisé par le fait que la rotule (31) comporte une partie externe de frottement constituée par du polyacétal.

18. Levier suivant l'une quelconque des revendications 1 à 17, caractérisé par le fait que la pièce pour la préhension du levier par le conducteur est constituée par un pommeau (24) en polychlorure de vinyl.

19. Procédé de fabrication d'un levier de commande de la boîte de vitesses d'un véhicule automobile constitué par une tige comportant à l'une de ses extrémités des moyens de fixation d'une pièce pour la préhension du levier par le conducteur, à son extrémité opposée, des moyens de liaison du levier à un organe de transmission de mouvement à la boîte de vitesses et, entre ses deux extrémités, une rotule de guidage et de maintien du levier, caractérisé par le fait qu'il consiste à mouler l'ensemble du levier par injection d'une matière thermoplastique, en une seule opération.

20. Procédé suivant la revendication 19, caractérisé par le fait que la rotule (31, 31') du levier est moulée en même temps que la tige (21) du levier, par une opération de bi-injection, la matière plastique constituant la partie extérieure (31') de la rotule étant différente de la matière plastique constituant la tige (21) du levier.

21. Procédé suivant l'une quelconque des revendications 19 et 20, caractérisé par le fait que la pièce pour la préhension du levier par le conducteur est constitué par un pommeau (24) en une matière plastique différente de la matière plastique constituant la tige (21) du levier (20) moulée par un procédé de bi-injection sur une partie d'extrémité (22) de la tige du levier, en une seule opération, pendant le moulage de l'ensemble du levier.

## Patentansprüche

1. Schalthebel für das Schaltgetriebe eines Kraftfahrzeuges, aufgebaut aus einer Stange (11, 21), welche an einem ihrer äußeren Enden Mittel (11b, 22) zum Befestigen eines Teils (12, 22, 28) zum Greifen des Hebels durch den Fahrer, an ihrem gegenüberliegenden äußeren Ende Verbindungsmittel (13, 33) des Hebels mit einem Bewegungsübertragungselement zum Schaltgetriebe und, zwischen ihren beiden ääußeren Enden, einen Kopf (16, 31, 44) zum Führen und Halten des Hebels umfaßt, dadurch gekennzeichnet, daß der Aufbau des Hebels (10, 20, 40) einstückig ist und ein einzelnes Teil aus thermoplastischem Material bildet.

2. Hebel nach Anspruch 1, dadurch gekennzeichnet, daß die Verbindungsmittel des Hebels (10, 20, 40) mit dem Bewegungsübertragungselement zum Schaltgetriebe durch ein in eine Querrichtung vergrößertes Teil (13, 33, 43) des einstückigen Hebels gebildet ist, welches, dieser Querrichtung folgend, von einer Bohrung (15) durchsetzt ist, wobei die Verbindung des Hebels und des Bewegungsübertragungselementes zum Schaltgetriebe durch eine Achse gebildet ist, die in die Bohrung (15) eingeführt ist und ein Verbindungsteil des Übertragungselementes durchquert.

3. Hebel nach Anspruch 2, dadurch gekennzeichnet, daß das vergrößerte Teil (13, 33, 43) des Hebels (10, 20, 40) seitlich um die Bohrung (15) biegsame Lippen, ununterbrochen oder unterbrochen, zum Einstellen des Spiels (14a, 14b, 14c) umfaßt.

4. Hebel nach Anspruch 3, dadurch gekennzeichnet, daß die Lippen (14) kreisförmige und ununterbrochene Ringe (14a) bilden.

5. Hebel nach Anspruch 3, dadurch gekennzeichnet, daß die Lippen (14b, 14c) Ringteile oder unterbrochene Abschnitte bilden, die einem die Bohrung (15) umgebenden Umfang folgen.

6. Hebel nach einem der Ansprüche 4 und 5, dadurch gekennzeichnet, daß die Lippen (14) eine Kegelstumpfform bilden.

7. Hebel nach einem der Ansprüche 4 und 5, dadurch gekennzeichnet, daß die Lippen (14', 14'') einen spitzeren äußeren Teil und einen Schnitt in Dreieckform bilden.

8. Hebel nach einem der Ansprüche 1 bis 7, dadurch gekennzeichnet, daß er eine Stange (11, 21) umfaßt, deren Querschnitt kreuzförmig ist.

9. Hebel nach einem der Ansprüche 1 bis 8, dadurch gekennzeichnet, daß die Stange (11, 21) des Hebels an ihrem äußeren Ende ein Teil (22) aufweist, das das Tragen und Halten eines Greifknopfes (24) sicherstellt, der auf das Teil (22) der Stange (21) des Hebels aufgeformt oder gleichzeitig mit der Stange (21) geformt ist.

10. Hebel nach einem der Ansprüche 1 bis 8, dadurch gekennzeichnet, daß er eine Stange (21) mit einem äußeren Ende (22) aufweist, welches den Aufbau eines Montagestückes (25) mit Klemmzungen (26) für die Befestigung eines Schaltknopfes (28) erlaubt.

11. Schalthebel nach einem der Ansprüche 1 bis 10, dadurch gekennzeichnet, daß er einen Kopf zum Führen und Halten (31, 31') aufweist, dessen innerer Teil durch die Stange (21') des Hebels (20) gebildet ist und dessen äußerer Kontaktteil (31') aus einem Kunststoff hergestellt ist, der unterschiedlich von dem Kunststoff ist, welcher die Stange (21) bildet.

12. Hebel nach Anspruch 11, dadurch gekennzeichnet, daß das Außenteil (31') des Kopfes durch denselben Formungsarbeitsgang wie die Stange (21') des Hebels, durch eine Formungstechnik mit zweifacher Einspritzung, hergestellt ist.

13. Hebel nach einem der Ansprüche 1 bis 12, dadurch gekennzeichnet, daß er hervorspringende Teile (29) aus dem Material bei der Formung auf der Stange (21) des Hebels aufweist, zum Halten einer Schutzhülle (30) des Hebels in dem Innenraum des Fahrzeugs.

14. Hebel nach einem der Ansprüche 1 bis 13, dadurch gekennzeichnet, daß er ein vorspringendes Teil (35, 35') in Querrichtung zum Betätigen eines elektrischen Schalters (36, 36') zum Regeln der Änderung der Geschwindigkeit des Fahrzeuges aufweist.

15. Hebel nach einem der Ansprüche 1 bis 14, dadurch gekennzeichnet, daß er, aus gleichem Material wie die Stange des Hebels, ein Plättchen (46) in transversaler Richtung aufweist, welche ein Loch (48) an ihrem äußeren Ende gegenüber der Stange des Hebels umfaßt, das dazu gedacht ist, in Anschlag mit einem Träger (41) zu kommen, der fest mit dem Boden (45) des Fahrzeuges verbunden ist, zum Einführen einer Stange (49) zur Diebstahlsicherung des Hebels (40) in das Loch (48) des Plättchens (46).

16. Hebel nach einem der Ansprüche 1 bis 15, dadurch gekennzeichnet, daß die Stange (11, 21) des Hebels aus einem durch Glasfaser verstärkten Polyamid gebildet ist.

17. Hebel nach einem der Ansprüche 1 bis 16, dadurch gekennzeichnet, daß das Kopf (31) ein äußeres Reibungsteil umfaßt, das aus Polyacetal gebildet ist.

18. Hebel nach einem der Ansprüche 1 bis 17, dadurch gekennzeichnet, daß das Teil zum Greifen des Hebels durch den Fahrer aus einem Knopf (24) aus Polyvinylchlorid gebildet ist.

19. Verfahren zum Herstellen eines Schalthebels für das Schaltgetriebe eines Kraftfahrzeuges, gebildet durch eine Stange, die an einem ihrer äußeren Enden Mittel zum Befestigen eines Stückes für das Greifen des Hebels durch den Fahrer, an ihrem gegenüberliegenden äußeren Ende Mittel zum Verbinden des Hebels mit einem Bewegungsübertragungselement zum Schaltgetriebe und zwischen ihren äußeren Enden einen Kopf zum Führen und halten des Hebels umfaßt, dadurch gekennzeichnet, daß es im Formen der Anordnung des Hebels durch Einspritzen eines thermoplastischen Materials in einem einzigen Arbeitsgang besteht.

20. Verfahren nach Anspruch 19, dadurch gekennzeichnet, daß das Kopf (31, 31') des Hebels gleichzeitig mit der Stange (21) des Hebels geformt wird, durch einen Arbeitsgang des zweifachen Einspritzens, wobei der Kunststoff, der das äußere Teil (31') des Kopfes bildet, unterschiedlich von dem Kunststoff ist, der die Stange (21) des Hebels bildet.

21. Verfahren nach einem der Ansprüche 19 und 20, dadurch gekennzeichnet, daß das Teil zum Greifen des Hebels durch den Fahrer durch einen Knopf (24) aus einem Kunststoff unterschiedlich von dem Kunststoff, welcher die Stange (21) des Hebels (20) bildet, gebildet ist, geformt durch ein Verfahren des zweifachen Einspritzens auf einem äußeren Teil (22) der Stange des Hebels, in einem einzigen Arbeitsgang, während des Formens des Hebelaufbaus.

## Claims

1. Gear lever for the gearbox of a motor vehicle constituted by a rod (11,21) comprising at one of its ends means (11b,22) for the attachment of a part (12, 22, 28) for the gripping of the lever by the driver, at its opposite end, means (13, 33) for connecting the lever to a member for the transmission of movement to the gearbox and, between its two ends, a ball and socket joint (16, 31, 44) for guiding and retaining the lever, characterised by the fact that the lever arrangement (10, 20, 40) is made in a one-piece construction and constitutes a single part of thermoplastics material.

2. Lever according to Claim 1, characterised by the fact that the means for connecting the lever (10, 20, 40) to the member for transmitting movement to the gearbox are constituted by a part (13, 33, 43) of the one-piece lever enlarged in a transverse direction and passing through which lever, in this transverse direction, is a bore (15), the connection of the lever and of the member for transmitting movement to the gearbox being constituted by a pin introduced into the bore (15) and passing through a connecting part of the transmission member.

3. Lever according to Claim 2, characterised by the fact that the enlarged part (13, 33, 43) of the lever (10, 20, 40) comprises, laterally, around the bore (15), continuous or discontinuous flexible lips for taking up play (14a, 14b, 14c).

4. Lever according to Claim 3, characterised by the fact that the lips (14) constitute circular and continuous rings (14a).

5. Lever according to Claim 3, characterised by the fact that the lips (14b, 14c) constitute discontinuous parts of a ring or studs, along a circumference surrounding the bore (15).

6. Lever according to one of Claims 4 and 5, characterised by the fact that the lips (14) have a frustoconical shape.

7. Lever according to one of Claims 4 and 5, characterised by the fact that the lips (14', 14") have a tapered outer part and a section in the shape of a triangle.

8. Lever according to one of Claims 1 to 7, characterised by the fact that it comprises a rod (11, 21) whereof the cross-section is cross-shaped.

9. Lever according to one of Claims 1 to 8, characterised by the fact that the rod (11, 21) of the lever comprises at its end a part (22) ensuring the support and retention of a gripping knob (24) moulded over the part (22) of the rod (21) of the lever or moulded at the same time aa the rod (21).

10. Lever according to one of Claims 1 to 8, characterised by the fact that it comprises a rod (21) having an end (22) facilitating the mounting of a connecting part (25) comprising clipping tongues (26) for the attachment of an operating knob (28).

11. Gear lever according to one of Claims 1 to 10, characterised by the fact that it comprises a guiding and retaining ball and socket joint (31, 31') whereof the inner part is constituted by the rod (21') of the lever (20) and whereof the outer contact part (31') is made from a plastics material which differs from the plastics material constituting the rod (21').

12. Lever according to Claim 11, characterised by the fact that the outer part (31') of the ball and socket joint is produced, by the same moulding operation as the rod (21') of the lever, by a technique of bi-injection moulding,

13. Lever according to one of Claims 1 to 12, characterised by the fact that it comprises projecting parts (29) produced in one piece at the time of moulding, on the rod (21) of the lever, for retaining a sheath (30) for protecting the lever in the passenger compartment of the vehicle.

14. Lever according to one of Claims 1 to 13, characterised by the fact that it comprises a port (35, 35') projecting in the transverse direction, for the actuation of an electrical switch (36, 36') for controlling the change of speed of the vehicle.

15. Lever according to one of Claims 1 to 14, characterised by the fact that it comprises, integral with the rod of the lever, a small plate (46) of transverse direction comprising a hole (48) at its end remote from the rod of the lever intended to come to bear on a support (41) integral with the floor (45) of the vehicle, for the introduction, into the hole (48) of the plate (46), of a bar (49) for the anti-theft locking of the lever (40).

16. Lever according to one of Claims 1 to 15, characterised by the fact that the rod (11, 21) of the lever is constituted by a polyamide reinforced with fibreglass.

17. Lever according to one of Claims 1 to 16, characterised by the fact that the ball and socket joint (31) comprises an outer friction part constituted by polyacetal.

18. Lever according to one of Claims 1 to 17, characterised by the fact that the part for the gripping of the lever by the driver is constituted by a knob (24) of polyvinylchloride.

19. Method for manufacturing a gear lever for the gearbox of a motor vehicle constituted by a rod comprising at one of its ends means for fixing a part for the gripping of the lever by the driver, at its opposite end, means for connecting the lever to a member for the transmission of movement to the gearbox and, between its two ends, a ball and socket joint for guiding and retaining the lever, characterised by the fact that it consists of moulding the lever assembly by the injection of a thermoplastics material, in a single operation.

20. Method according to Claim 19, characterised by the fact that the ball and socket joint (31, 31') of the lever is moulded at the same time as the rod (21) of the lever, by a bi-injection operation, the plastics material constituting the outer part (31') of the ball and socket joint being different from the plastics material constituting the rod (21) of the lever.

21. Method according to one of Claims 19 and 20, characterised by the fact that the part for the gripping of the lever by the driver is constituted by a knob (24) of a plastics material which differs from the plastics material constituting the rod (21) of the lever (20) moulded by a bi-injection method on an end part (22) of the rod of the lever, in a single operation, during the moulding of the lever assembly.

FIG.1

FIG.2

FIG.3

FIG.5

FIG.4

FIG.6A

FIG.6B

FIG.6C

FIG.6

FIG.7A

FIG.7B

FIG.7C

FIG.11

26

27        25

24

10        22

10

FIG.9

22

21

29

30

20

31

24

22

FIG.10

28

13

26        13

FIG.12

36   35

34

33

FIG.8

28

26

FIG.13

## FIG.15

42

40

16

16

47 46

49

44

41

45

43

## FIG.14

21'

31'

## FIG.16

48    46    40

## FIG.17

36'    37

35'